# EUROPÄISCHE PATENTSCHRIFT

(11) **EP 1 486 324 B1**
(45) Veröffentlichungstag und Bekanntmachung des Hinweises auf die Patenterteilung: **08.11.2006**
(21) Anmeldenummer: 03013124.7
(22) Anmeldetag: 11.06.2003
(51) Int. Cl.: B32B 25/10, B32B 25/12, C09D 5/36, B60J 7/12

(54) **Verbundmaterial für Cabriolet-Fahrzeugabdeckungen**
Composite material for vehicule soft-tops
Materiaux composites pour voitures decapotables

(43) Veröffentlichungstag der Anmeldung: 15.12.2004
(73) Patentinhaber: ContiTech Elastomer-Beschichtungen GmbH, 30165 Hannover (DE)
(72) Erfinder: Bartholmei, Peter, Dr., 37154 Northeim (DE); Passon-Wesseloh, Barbara, Dr., 37073 Göttingen (DE); Weber, Thomas, 37115 Duderstadt (DE); Gerlach, Torsten, 37154 Northeim (DE)
(74) Vertreter: Finger, Karsten

(56) Entgegenhaltungen:
- EP-A- 0 659 843
- EP-A- 0 887 398
- EP-A- 1 078 975
- EP-A- 1 273 646
- WO-A-00/49105
- WO-A-01/30920
- WO-A-01/30921
- WO-A-98/38253
- WO-A-99/11719
- WO-A-99/11733
- WO-A-99/24529
- WO-A-99/57223
- DE-A- 4 441 223
- DE-A- 19 639 165
- DE-A- 19 738 368
- DE-A- 19 738 369
- DE-A- 19 757 699
- DE-A- 19 940 681
- US-A- 6 143 379
- US-A1- 2003 085 380
- US-B1- 6 535 268
- US-B1- 6 544 327

## Beschreibung

Die Erfindung betrifft ein Verbundmaterial, aufweisend zumindest eine textile Trägerschicht und zumindest eine nach außen nicht mehr von einer textilen Trägerschicht verdeckte Elastomerlage aus einer vernetzten, auf transparentem Kautschuk basierenden Kautschukmischung. Ferner betrifft die Erfindung die Verwendung eines solchen Verbundmaterials.

Verbundmaterialien aus textilen Trägerschichten und Elastomerlagen sind für die unterschiedlichsten Verwendungszwecke, wie z. B. für Abdeckungen, gasdichte flexible Behälter, Bekleidung, Schlauchboote, Faltenbälge, Verdecke usw., bekannt.

In der DE 44 16 356 C2 sind Verbundmaterialien für die Herstellung von Luftschiffhüllen, wetterfester Bekleidung, wasserdichten Abdeckungen und Überdachungen beschrieben, die transparent sind und eine hohe UV-Beständigkeit und eine niedrige Gaspermeabilität aufweisen. Die Verbundmaterialien sind aus einer Trägerschicht aus einem farblosen, hochfesten synthetischen Garnmaterial und einer darauf aufgebrachten hellen Gummibeschichtung aus Ethylen-Vinylacetat-Kautschuk, hellem Füllstoff, Peroxidvemetzer und ggf. weiteren üblichen Zusatzstoffen aufgebaut.

Ein Verdeckstoff für Fahrzeuge, insbesondere Cabriolets, ist in der DE 39 00 846 A1 beschrieben. Damit die Verdeckstoffe auch bei aggressiven Umweltbedingungen eine gute Wetterechtheit, Schmutzunempfindlichkeit und Lebensdauer aufweisen, bestehen die Kett- und Schussfäden des Gewebes des Verdeckstoffes aus Polyacrylnitril. Zusätzlich kann das Gewebe oberseitig mit einer Beschichtung aus einem transparenten Kunststoffmaterial, z. B. auf Basis von fluorhaltigen Polymeren, versehen werden, um die Wetterfestigkeit, den UV-Schutz, die Gleiteigenschaften und die Chemikalienbeständigkeit zu verbessern.

Der Erfindung liegt die Aufgabe zu Grunde, ein Verbundmaterial mit textiler Trägerschicht und Elastomerlage bereitzustellen, das sich durch einen dauerhaften metallischen Glanz und hohe Witterungsbeständigkeit auszeichnet.

Gelöst wird diese Aufgabe erfindungsgemäß dadurch, dass die Kautschukmischung der Elastomerlage auf Ethylen-Vinylacetat-Kautschuk oder Silikonkautschuk basiert und reflektierende Effektpigmente enthält.

Überraschenderweise kann ein dauerhafter metallischer Glanz (Metalleffekt, Metallic-Effekt) des Verbundmaterials und die gleichzeitige Witterungsbeständigkeit nur durch die spezielle Kombination von Ethylen-Vinylacetat-Kautschuk oder Silikonkautschuk mit den reflektierenden Effektpigmenten erreicht werden. Die Kombination der Effektpigmente mit anderen Kautschuken, wie z. B. Naturkautschuk, chlorsulfoniertem Polyethylen oder Ethylen-Propylen-Dien-Kautschuk, führte - auch wenn diese anderen Kautschuke transparent waren - entweder nicht zu metallischem Glanz oder nicht zu einem dauerhaften Erhalt des metallischen Glanzes bei Einwirkung von Witterungseinflüssen; die Transparenz und damit der Metallic-Effekt gingen bei allen anderen untersuchten Kautschuken nach kurzer Freibewitterung verloren.

Das Verbundmaterial zeichnet sich außerdem durch gute Wärmealterungs-, UV- und Ozonbeständigkeit aus, ist reißfest und faltbar.

Die reflektierenden Effektpigmente werden der Kautschukmischung für die Elastomerlage bevorzugt in Mengen von 1 bis 8 phr zugesetzt. Mit diesen Mengen erhält man einen besonders guten metallischen Glanz, obwohl wenig von den oftmals teuren Effektpigmenten eingesetzt wird. Die Struktur der textilen Trägerschicht bleibt durch die Lage hindurch sichtbar. Die anderen Eigenschaften der Elastomerlage werden durch diese Mengen an Pigment nicht negativ beeinflusst.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile verschiedener Kautschuke zu 100.

Als reflektierende Effektpigmente können alle Pigmente verwendet werden, die einen optischen Effekt erzeugen, der vorwiegend auf Lichtreflexion beruht. Vorzugsweise werden Metalleffektpigmente, wie z. B. Aluminiumpigmente, Perlglanzpigmente, wie z. B. Metalloxid-Glimmer-Pigmente, oder Flüssigkristallpigmente sowie Mischungen aus diesen Pigmenten verwendet.

Gemäß einer vorteilhaften Weiterbildung der Erfindung ist die Kautschukmischung der Elastomerlage mit den Effektpigmenten peroxidisch vernetzt, basiert auf Ethylen-Vinylacetat-Kautschuk mit einem Vinylacetat-Gehalt von 40 bis 80 Gew.-% und enthält 10 bis 40 phr Kieselsäure. Eine Lage aus einer derartigen Mischung zeichnet sich durch einen besonders guten metallischen Glanz aus und ist zudem gasdicht. Der Kieselsäureanteil von 10 bis 40 phr bewirkt eine optimale Verstärkung.

Die Kautschukmischung der Elastomerlage kann weitere übliche Bestandteile, wie z. B. Alterungs- und Lichtschutzmittel, Stearinsäure, Aktivatoren, weitere Füllstoffe und Weichmacher, in üblichen Mengen enthalten.

Das Verbundmaterial kann neben der Elastomerlage mit den Effektpigmenten noch weitere Elastomerlagen ohne die oftmals teuren Effektpigmente aufweisen, um dem Verbundmaterial weitere gewünschte Eigenschaften, wie z. B. eine gute Haftung zwischen textiler Trägerschicht und Elastomerlage oder eine weiter verbesserte Gasdichtigkeit, zu verleihen. Diese weiteren Lagen können sich zwischen der Elastomerlage mit Effektpigmenten und der textilen Trägerschicht befinden. Dabei kann es sich z. B. um Gummierungsschichten der textilen Trägerschicht handeln, die auf verschiedenen Kautschuken, wie z. B. Ethylen-Vinylacetat-Kautschuk, Silikonkautschuk, chlorsulfoniertem Polyethylen oder Ethylen-Propylen-Dien-Kautschuk, basieren. Der äußere optische Eindruck wird durch diese weiteren Schichten nicht beeinflusst. Weitere Lagen können sich auch von der Elastomerschicht mit den Effektpigmenten nach außen weisend befinden. Diese dienen dann z. B. als Schutz vor Abrieb und sind bevorzugt transparent ausgebildet, um die Lage mit den Effektpigmenten sichtbar werden zu lassen.

Vorzugsweise sind die Kautschukmischungen der weiteren Elastomerlagen, die keine Effektpigmente enthalten, peroxidisch vernetzt, basieren auf Ethylen-Vinylacetat-Kautschuk mit einem Vinylacetat-Gehalt von 40 bis 80 Gew.-% und enthalten 10 bis 40 phr Kieselsäure. Auf diese Weise vermeidet man Unverträglichkeiten zwischen den verschiedenen Lagen und nutzt die Vorteile der Kautschukmischung wie Wärmealterungs- und UV-Beständigkeit aus.

Gemäß einer vorteilhaften Weiterbildung der Erfindung weist die äußerste Elastomerlage auf der von der textilen Trägerschicht abgewandten Seite eine transparente Fluorpolymerlack-Schicht auf. Dadurch wird eine verbesserte Wetterfestigkeit, Kratzfestigkeit, eine geringe Neigung der äußeren Schicht zur Schmutzanhaftung und eine bessere Chemikalienbeständigkeit erzielt. Zusätzlich verbessert diese Schicht die Gleiteigenschaften des Verbundmaterials auf der beschichteten Seite. Wird das Material mit den Fluorpolymerlack-Schichten aneinander gerieben, kommt es nicht mehr zu einem Quietschen, was beim Aneinanderreiben von Elastomerlagen häufig zu vernehmen ist und z. B. beim Einsatz des Verbundmaterials als Cabriolet-Verdeckstoff als störend empfunden wird. Als Fluorpolymerlacke können beispielsweise solche des Typs Rowaflon® der Firma ROWA-GmbH verwendet werden.

Bei der textilen Trägerschicht des Verbundschichtmaterials kann es sich, je nach gewünschtem Einsatz, um ein Gewebe, Gewirke, Gestricke oder ein Multiaxial-Gelege handeln. Bevorzugt wird als textile Trägerschicht ein Gewebe aus Polyester oder Polyacrylnitril verwendet. Derartige Gewebe zeichnen sich durch sehr hohe Festigkeiten in alle Raumrichtungen aus.

Die textile Trägerschicht kann nur einseitig mit Elastomerlagen und dann auf der von den Elastomerlagen abgewandten Seite mit einem Vlies versehen sein. Das Vlies dient der Stabilisierung des textilen Trägers vor und bei der Verarbeitung.

Das Verbundmaterial kann mittels herkömmlicher Verfahren hergestellt und dann für unterschiedliche Verwendungszwecke eingesetzt werden. So können die vorteilhaften Eigenschaften (metallischer Glanz und Witterungsbeständigkeit) des Verbundmaterials bevorzugt bei Verwendung als Verdeckstoff für Cabriolets, für Faltenbälge von Gelenkbussen oder Fluggastbrücken, für Boote oder für Bekleidung genutzt werden.

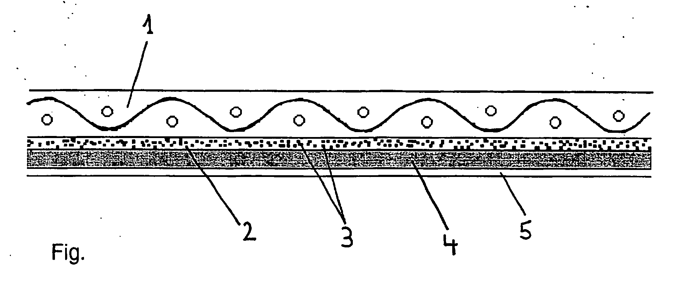

Im Folgenden wird die Erfindung anhand eines vorteilhaften Ausführungsbeispiels unter Bezugnahme auf die beigefügte Figur näher erläutert.

Die einzige Figur zeigt schematisch ein erfindungsgemäßes Verbundmaterial aus einem gummierten Gewebe 1 aus Polyacrylnitrilgarn, auf das einseitig zunächst eine Elastomerlage 2, die auf Ethylen-Vinylacetat-Kautschuk basiert und reflektierende Effektpigmente 3 enthält, aufgebracht ist, dem sich eine weitere Elastomerlage 4 aus einer transparenten Kautschukmischung, z. B. auf der Basis von Ethylen-Vinylacetat-Kautschuk, anschließt. Als äußere Schicht weist das Verbundmaterial eine Fluorpolymerlack-Schicht 5 auf.

Das Verbundmaterial gemäß der Figur wurde hergestellt, indem ein Gewebe aus Polyacrylnitrilgarn einseitig mit einer ersten Lösung aus einer Kautschukmischung in Toluol bestrichen wurde. Der Streichvorgang kann mehrfach wiederholt werden. Die Lösung kann aber auch durch Tauchen oder Sprühen aufgebracht werden. Die Kautschukmischung setzte sich zusammen aus 100 phr Ethylen-Vinylacetat-Kautschuk, 1,5 phr Calciumstearat, 1 phr Lichtschutzmittel, 30 phr Kieselsäure und 2,6 phr Triallylcyanurat. Die Lösung wurde hergestellt aus 48,8 Gew.-% der Kautschukmischung, 49,9 Gew.-% Toluol und 1,3 Gew.-% 2,5-Dimethyl-2,5-di-tert.-butyl-peroxihexan auf Inertmaterial (Peroxidgehalt: 50 %). Nach dem Aufstreichen wurde das Material getrocknet.

Eine zweite Lösung aus einer Kautschukmischung in Toluol wurde hergestellt, die die gleichen Inhaltstoffe wie die im vorherigen Absatz beschriebene aufwies mit dem Unterschied, dass die Kautschukmischung zusätzlich 3 phr Aluminiumpigmente 3 enthielt. Die Lösung wurde auf das bereits mit der ersten Lösung gummierte Gewebe durch dreimaliges Streichen aufgebracht. Nach der Vulkanisation bildet diese Schicht die Elastomerlage 2, die Effektpigmente 3 enthält.

Nach dem Trocknen wurde diese Lage 2 erneut mit der ersten Lösung bestrichen, die nach der Vulkanisation dann die weitere Elastomerlage 4, die transparent ist, bildet. Die Lage 4 kann auch als kalandrierte Kautschukmischungsplatte aufgebracht werden. Abschließend wurde ein Fluorpolymerschutzlack aufgestrichen und nach dem Trocknen der gesamte Verbund mit herkömmlichen Vulkanisationsverfahren vulkanisiert.

Das so hergestellte Verbundmaterial zeichnet sich durch einen dauerhaften metallischen Glanz und ein hohe Witterungsbeständigkeit aus. Verbundmaterialien, die einen gleichen Aufbau haben, aber Elastomerlagen aufweisen, die auf anderen Kautschuken als auf Ethylen-Vinylacetat-Kautschuk oder Silikonkautschuk basieren, verloren durch ein Verfärben das Materials ihren metallischen Glanz schon nach kurzer Lebensdauer. So wurden zum Vergleich beispielsweise Verbundmaterialien, deren Elastomerlagen auf Naturkautschuk, auf chlorsulfoniertem Polyethylen und auf Polyurethanelastomeren basieren, hergestellt und zum Altern auf einem Freigelände ausgelegt. Nur das erfindungsgemäße Verbundmaterial behielt bei natürlicher Bewitterung den metallischen Glanz bei.

Das Verbundmaterial gemäß der Figur kann z. B. als Cabriolet-Verdeckstoff verwendet werden, wobei die Seite mit den Elastomerlagen nach außen weist. Das Verdeck aus diesem Material zeichnet sich durch einen dauerhaften metallischen Glanz und gute Wetterfestigkeit aus. Ferner lässt sich das Verdeck gut falten, quietscht nicht beim Falten und ist schmutzabweisend.

## Patentansprüche

1. Verbundmaterial, aufweisend zumindest eine textile Trägerschicht (1) und zumindest eine nach außen nicht mehr von einer textilen Trägerschicht (1) verdeckte Elastomerlage (2) aus einer vernetzten, auf transparentem Kautschuk basierenden Kautschukmischung,
wobei die Kautschukmischung der Elastomerlage (2) auf Ethylen-Vinylacetat-Kautschuk oder Silikonkautschuk basiert und reflektierende Effektpigmente (3) enthält.

2. Verbundmaterial nach Anspruch 1, **dadurch gekennzeichnet, dass** die Kautschukmischung der Elastomerlage (2) reflektierende Effektpigmente (3) in einer Menge von 1 bis 8 phr (Gewichtsteile, bezogen auf 100 Gewichtsteile der gesamten Kautschuke in der Mischung) enthält.

3. Verbundmaterial nach Anspruch 1 oder 2, **dadurch gekennzeichnet, dass** als Effektpigmente (3) Metalleffektpigmente, Perlglanzpigmente, Flüssigkristallpigmente oder Mischungen daraus verwendet werden.

4. Verbundmaterial nach zumindest einem der vorhergehenden Ansprüche, **dadurch gekennzeichnet, dass** die Kautschukmischung der Elastomerlage (2) peroxidisch vernetzt ist, auf Ethylen-Vinylacetat-Kautschuk mit einem Vinylacetat-Gehalt von 40 bis 80 Gew.-% basiert und 10 bis 40 phr Kieselsäure enthält.

5. Verbundmaterial nach zumindest einem der vorhergehenden Ansprüche, **dadurch gekennzeichnet, dass** das Verbundmaterial weitere Elastomerlagen (4) ohne reflektierende Effektpigmente zwischen der textilen Trägerschicht (1) und der Elastomerschicht (2) mit den Effektpigmenten oder von der Elastomerschicht (2) mit den Effektpigmenten nach außen zeigend aufweist.

6. Verbundmaterial nach Anspruch 5, **dadurch gekennzeichnet, dass** die Kautschukmischungen der weiteren Elastomerlagen (4) peroxidisch vernetzt sind, auf Ethylen-Vinylacetat-Kautschuk mit einem Vinylacetat-Gehalt von 40 bis 80 Gew.-% basieren und 10 bis 40 phr Kieselsäure enthalten.

7. Verbundmaterial nach zumindest einem der vorhergehenden Ansprüche, **dadurch gekennzeichnet, dass** die äußerste Elastomerlage (4) auf der von der textilen Trägerschicht (1) abgewandten Seite eine transparente Fluorpolymerlack-Schicht (5) aufweist.

8. Verbundmaterial nach Anspruch 1 oder 2, **dadurch gekennzeichnet, dass** die textile Trägerschicht (1) ein Gewebe aus Polyester oder Polyacrylnitril ist.

9. Verbundmaterial nach zumindest einem der vorhergehenden Ansprüche, **dadurch gekennzeichnet, dass** die textile Trägerschicht (1) nur einseitig mit Elastomerlagen (2, 4) versehen ist und auf der von den Elastomerlagen (2, 4) abgewandten Seite ein Vlies aufweist.

10. Verwendung des Verbundmaterials nach einem der Ansprüche 1 bis 9 als Verdeckstoff für Cabriolets, für Faltenbälge von Gelenkbussen oder Fluggastbrücken, für Boote oder für Bekleidung.

## Claims

1. Composite material, having at least one textile substrate layer (1) and at least one elastomer layer (2), which is no longer covered on the outside by a textile substrate layer (1) and comprises a crosslinked rubber mixture based on transparent rubber, the rubber mixture of the elastomer layer (2) being based on ethylene-vinyl acetate rubber or silicone rubber and containing reflective-effect pigments (3).

2. Composite material according to Claim 1, **characterized in that** the rubber mixture of the elastomer layer (2) contains reflective-effect pigments (3) in an amount from 1 to 8 phr (parts per hundred parts of the entire rubber by weight in the mixture).

3. Composite material according to Claim 1 or 2, **characterized in that** metal-effect pigments, pearlescent pigments, liquid-crystal pigments or mixtures thereof are used as effect pigments (3).

4. Composite material according to at least one of the preceding claims, **characterized in that** the rubber mixture of the elastomer layer (2) is peroxide-crosslinked, based on ethylene-vinyl acetate rubber with a vinyl acetate content of from 40 to 80% by weight and contains 10 to 40 phr of silica.

5. Composite material according to at least one of the preceding claims, **characterized in that** the composite material has further elastomer layers (4) without reflective-effect pigments between the textile substrate layer (1) and the elastomer layer (2) with the effect pigments or facing outwards from the elastomer layer (2) with the effect pigments.

6. Composite material according to Claim 5, **characterized in that** the rubber mixtures of the further elastomer layers (4) are peroxide-crosslinked, based on ethylene-vinyl acetate rubber with a vinyl acetate content of from 40 to 80% by weight and contain 10 to 40 phr of silica.

7. Composite material according to at least one of the preceding claims, **characterized in that** the outermost elastomer layer (4) has on the side facing away from the textile substrate layer (1) a transparent fluoropolymer coating layer (5).

8. Composite material according to Claim 1 or 2, **characterized in that** the textile substrate layer (1) is a woven fabric of polyester or polyacrylonitrile.

9. Composite material according to at least one of the preceding claims, **characterized in that** the textile substrate layer (1) is only provided with elastomer layers (2, 4) on one side and has a nonwoven on the side facing away from the elastomer layers (2, 4).

10. Use of the composite material according to one of Claims 1 to 9 as a material for soft-top vehicles, for concertinas for articulated buses or airbridges, for boats or for clothing.

## Revendications

1. Matériau composite, présentant au moins une couche de support textile (1) et au moins une couche élastomère (2), faite d'un mélange de caoutchouc réticulé, à base de caoutchouc transparent, non plus recouvert, vers l'extérieur, d'une couche de support textile (1), le mélange de caoutchouc de la couche élastomère (2) se basant sur un caoutchouc éthylène-acétate de vinyle ou sur un caoutchouc aux silicones, et contenant des pigments à effets réfléchissants (3).

2. Matériau composite selon la revendication 1, **caractérisé en ce que** le mélange de caoutchouc de la couche élastomère (2) contient les pigments à effets réfléchissants (3) dans une quantité de 1 à 8 phr (parts en poids, par rapport à 100 parts en poids du caoutchouc global dans le mélange).

3. Matériau composite selon la revendication 1 ou 2, **caractérisé en ce que** l'on utilise, en tant que pigments à effets (3), des pigments à effets métalliques, des pigments à lustre perlaire, des pigments à cristaux liquides ou des mélanges de ces derniers.

4. Matériau composite selon au moins l'une quelconque des revendications précédentes, **caractérisé en ce que** le mélange de caoutchouc de la couche élastomère (2) est réticulée par voie peroxydique, sur la base d'un caoutchouc éthylène-acétate de vinyle ayant une teneur en acétate de vinyle de 40 à 80% en poids, et contient de 10 à 40 phr d'acide silicique.

5. Matériau composite selon au moins l'une quelconque des revendications précédentes, **caractérisé en ce que** le matériau composite présente, en montrant vers l'extérieur, des couches élastomères supplémentaires (4), sans pigments à effets réfléchissants, entre la couche de support textile (1) et la couche élastomère (2) avec les pigments à effets ou de la couche élastomère (2) avec les pigments à effets.

6. Matériau composite selon la revendication 5, **caractérisé en ce que** les mélanges de caoutchouc des couches élastomères supplémentaires (4) sont réticulés par voie peroxydique, se basent sur un caoutchouc éthylène-acétate de vinyle ayant une teneur en acétate de vinyle de 40 à 80% en poids et contiennent de 10 à 40 phr d'acide silicique.

7. Matériau composite selon au moins l'une quelconque des revendications précédentes, **caractérisé en ce que** la couche élastomère la plus extérieure (4) présente, sur la face tournée à l'opposé de la couche de support textile (1), une couche de vernis polymère au fluor transparente (5).

8. Matériau composite selon la revendication 1 ou 2, **caractérisé en ce que** la couche de support textile (1) est un tissu fait de polyester ou de polyacrylonitrile.

9. Matériau composite selon l'une quelconque des revendications précédentes, **caractérisé en ce que** la couche de support textile (1) n'est pourvue que sur une face de couches élastomères (2, 4) et présente, sur la face tournée à l'opposée des couches élastomères (2, 4), un matériau non tissé.

10. Utilisation du matériau composite selon l'une quelconque des revendications 1 à 9 sous la forme de substance de recouvrement pour cabriolets, pour soufflets d'autobus articulés ou de passerelles pour passagers d'avion, pour bateaux ou pour habillement.
